# EUROPEAN PATENT APPLICATION

(11) **EP 3 614 059 A1**
(43) Date of publication of application: **26.02.2020**
(21) Application number: 18190569.6
(22) Date of filing: 23.08.2018
(51) Int. Cl.: F24F 3/16, F24F 11/00, F24F 11/64, B01D 53/14, B01D 53/62, F24F 110/70, F24F 110/76

(54) **METHOD AND DEVICE TO IMPROVE AIR QUALITY IN CLOSED ENVIRONMENTS**

(71) Applicant: Antecy B.V., 3871 KM Hoevelaken (NL)
(72) Inventor: HEINERMAN, Jacobus Johannes Leo, 1391 AC Abcoude (NL); O'CONNOR, Paul, 3871 KM Hoevelaken (NL)
(74) Representative: Bremi, Tobias Hans

(57) **Abstract**

The invention relates to a method and a device to improve air quality in closed environments where humans and/or animals live, said method comprising
a) Taking in air from the closed environment and/or taking in ventilation air from outside,
b) Treating the air to reduce carbon dioxide CO₂ content of the air,
c) Introducing the treated air into the closed environment,
d) wherein the CO₂ level in the closed environment is kept to a level below 600 ppm CO₂.

## Description

### BACKGROUND OF THE INVENTION

### 1. Field of the Invention

The invention relates to a method and to an air conditioning device to improve air quality in closed environments where humans and/ or animals live.

### 2. Background of the invention

Known air conditioning devices improve air quality in closed environments where humans and/or animals live mainly by controlling temperature and relative humidity.

Refreshing the air by diluting with fresh "outside" air requires a high rate of air ventilation/ refreshment, meaning high air rates, energy loss in heating the generally cooler outside air and costs.

Modern houses are highly isolated and prevent natural ventilation to save heating energy. The poor ventilation causes problems of air quality in the closed environment which may cause different health problems.

Therefore, the problem of the invention is to provide a method and an air conditioning device to improve air quality in closed environments where humans and/ or animals live that do not have one or more of the mentioned problems.

### BRIEF SUMMARY OF THE INVENTION

According to the invention there is provided a method and a device for implementing the method to improve air quality in closed environments where humans and/ or animals live, said method comprising
a) Taking in air from the closed environment and/or taking in ventilation air from outside,
b) Treating the air to reduce carbon dioxide CO₂ content of the air,
c) Introducing the treated air into the closed environment ,
d) wherein the CO₂ level in the closed environment is preferably kept to a level below 600 ppm CO₂

The present invention addresses the air quality problems by reducing the CO2 content of the outside fresh air, that typically has a CO2 content of about 400 ppm CO2, to a level typically below 400 ppm, preferably below 300 ppm, more preferably below 200 ppm or even below 100 ppm, before bringing the outside air in the closed environment, by adsorbing and capturing the CO2 of the outside air and/or by reducing the CO2 content of the spoiled inside air in the closed environment to below 400 ppm and recirculating that treated air optionally and preferably in combination with treated outside fresh air. Reducing the CO2 content is preferably done on an environmentally friendly sorbent capturing the Carbon dioxide from Air ("CAIR").

Another aspect of the invention comprises use of the CO₂ captured for the growing of biomass (horticulture, algae etc.) and/ or the conversion to fuels, chemicals and food by any other means.

Another aspect of the invention comprises also capturing water from the air and utilizing for the growing of biomass (horticulture, algae etc.) and/or the conversion to fuels, chemicals and food by any other means.

### DETAILED DESCRIPTION OF THE INVENTION

In accordance with the invention there is provided a method and an air conditioning device as described in the following embodiments:
1. a method to improve air quality in closed environments where humans and/or animals live, comprising
   a) Taking in air from the closed environment and/or taking in ventilation air from outside,
   b) Treating the air to reduce carbon dioxide CO₂ content of the air,
   c) Introducing the treated air into the closed environment ,
   d) wherein the CO₂ level in the closed environment is preferably kept to a level below 600 ppm CO₂
2. The method of embodiment 1 wherein the CO₂ content in the treated air is reduced to below 400 ppm, preferably below 300, 200 or even below 100 ppm.
3. The method of embodiments 1 - 2, wherein the CO₂ content in the treated air is reduced by contacting the air with a CO₂ adsorbent to capture the CO₂, preferably a non-toxic CO₂ adsorbent.
4. The method of embodiments 1 - 3, comprising a step wherein the CO₂ content in the closed environment is measured and the CO₂ content is reduced if the CO₂ level in the closed environment is above 600 ppm.
5. The method of embodiments 1 - 4, wherein in step a) also ventilation air from outside is taken in to increase the oxygen O₂ content in the closed environment.
6. The method of embodiments 1 - 4, comprising a step wherein the oxygen O₂ content in the closed environment is measured and ventilation air is taken in from outside, instead of- or in addition to- air taken in from the closed environment, if the oxygen O₂ content in the closed environment is below a set threshold value, preferably below a level of 18.0, more preferably 18.5, even more preferably 19.0 and most preferably below 19.5 (dry volume) percent.
7. The method of embodiment 1 to 6, wherein also water is captured from the air.
8. The method of embodiment 1 to 7, whereby CO₂ and optionally also water is captured and reused for the growing of plants and/ or other biomass materials or for the conversion into fuels, chemicals or food components.
9. An air conditioning device for improving the air quality in closed environments where humans and/ or animals live, comprising
   a) inlet means a) for taking in air from the closed environment (a1) or means for taking in ventilation air from outside (a2) or, more preferably, both,
   b) means b) for treating the air by reducing carbon dioxide CO₂ content of the air, wherein the CO₂ content in the treated air is reduced to below 400 ppm, preferably below 300, 200 or even below 100 ppm and wherein the CO₂ removed from the air is preferably captured,
   c) outlet means c) for introducing the treated air into the closed environment,
   d) preferably means d1) for measuring the CO₂ level in the closed environment and control means d2) for controlling means a) and/ or b) to an amount of air taken in and/or a reduction of carbon dioxide CO₂, in the treated air such that the CO₂ level in the closed environment is kept to a level below a set level, preferably below 600 ppm CO₂,
   e) preferably means e1) for measuring the O₂ level in the closed environment, and control means e2) for controlling means a) and/ or b) to take in ventilation air taken in from outside, instead- of or in addition to air taken in from the closed environment, if the oxygen O₂ content in the closed environment is below a set threshold value, preferably below preferably below a level of 18.0, more preferably 18.5, even more preferably 19.0 and most preferably below 19.5 (dry volume) percent,
   f) preferably cooling means f),
   g) Preferably means g) for capturing water from the air,
   h) Preferably means h) for providing the captured CO₂ and optionally water that is captured for growing of plants and/ or other biomass materials or for conversion into fuels, chemicals or food components.

The term closed environment where humans and/ or animals live, does not require the environment to be complete closed, but means poorly ventilated environments, such as rooms in houses or stables, wherein accumulation of CO2 occurs as a result of the humans or animals living therein.

In a simple embodiment, the method and device can operate to reduce CO2 from the air in the closed environment (inside air) only by taking in air from the closed environment (a1), treating the air to reduce CO2 and recirculating the treated air back into the closed environment. This can be used in combination with other air conditioning systems not having this feature or simply in combination with fresh air inlet.

In another embodiment, the method and device can operate to reduce CO2 from outside fresh air only, treating the outside air to reduce CO2 and bringing the oxygen rich air with reduced CO2 into the closed environment.

In a preferred embodiment, the method and device can operate to reduce the CO2 both from the outside air and from the inside air and means to determine and/ or set the amounts of outside and inside air taken in for treatment, wherein the amounts are chosen i.a. in view of the inside and outside temperature.

In the air conditioning device the outside air or the recirculated inside air is preferably passed through a compartment containing an adsorbent. Suitable adsorbents are alkali or earth alkaline metal absorbent.

Once the adsorbent contains so much CO₂ that it is not substantially decreasing the CO₂ of the outside air or recirculated inside air, the adsorbent needs to be cleaned from CO₂.

To be able to continuously keep the CO₂ content of the inside air at a level below the target value (e.g. 600 ppm) it may be required to have the ventilation equipment composed of 2 identical compartments such that one compartment is used for the ventilation, while in the other compartment the adsorbed CO₂ is removed.

For a description of a possible adsorbent compartment see WO2016050944 [ANTECY B.V.] [NL], 7 April 2016 (07.04.2016) describing a suitable embodiment wherein the compartment comprises a reactor system for conducting an adsorption/desorption swing process comprising: at least one adsorption reactor; at least one desorption reactor; means for transporting a particulate adsorbent material between the at least one adsorption reactor and the at least one desorption reactor and wherein the swing process for example comprises a temperature swing, a pressure swing, a moisture swing, or a combination thereof to desorp the carbon dioxide and wherein the particulate adsorbent preferably comprises an oxide or salt capable of forming a carbonate or a bicarbonate upon contact with carbon dioxide, preferably potassium carbonate, potassium carbonate sesquihydrate, optionally on a particulate support (eg selected from activated carbon, alumina, and silica).

In another embodiment CO2 is absorbed to an alkali or earth alkaline metal absorbent in a CO2 absorption step wherein the alkali or earth alkaline metal absorbent is contacted with a first gas composition; and a CO2 desorption step wherein the alkali or earth alkaline metal absorbent is contacted with a second gas composition, and the respective moisture contents of the first and second gas compositions are controlled such that during the absorption step the alkali or earth alkaline metal absorbent is converted to a bicarbonate, and during the desorption step the alkali or earth alkaline metal absorbent is converted to a carbonate hydrate. Further preferences of this process are described in WO2015082567 [ANTECYB.V.] [NL], 11 June 2015 (11.06.2015).

The adsorbent itself is preferably a sorbent with a high capacity for CO2 and preferably an adsorbent that is environmentally friendly. For possible adsorbents see WO2017148782 [ANTECY B.V.] [NL], 08 September 2017 (08.09.2017) describing suitable adsorbent in the form of attrition resistant shaped porous materials or particles comprising: a) an organic Carbon based support and/ or binder, b) an inorganic binder and support, c) inorganic oxides and/ or Carbonates, dispersed on a) and/or b) as CO2 capturing sorbent. Inorganic oxides preferably are inorganic metal oxide like single or mixed oxides consisting of Zn, Fe, Cu, Ca and Mg. Carbonates preferably are K2CO3, KHCO3, NaCO3, or NaHCO3. Most preferred sorbents are K₂CO₃.1.5H₂0 supported on the surface of an Active Carbon (AC), preferably an AC honeycomb element. These sorbents are nontoxic and avoid contamination of the air with toxins, which can occur for example when amine type sorbents (liquid or solid) are used.

Another possibility to operate the ventilation system is to replace the CO₂ loaded adsorbent with an adsorbent without CO₂. Subsequently, the CO₂ loaded adsorbent can be cleaned, for example according to procedures as described in WO2014012966 [ANTECYB.V.] [NL], 23 January 2014 (23.01.2014) and reused.

In a preferred embodiment the energy consumption is minimized by minimizing the amount of intake cold fresh outside air by maximally reducing the amount of CO2 in the outside air, preferably to a level below 300, more preferably below 200 and even more preferably below 100 ppm and if needed mixing that with treated inside air to reduce CO2 and increase O2 to a level preferably above 18.0, more preferably above 18.5, even more preferably above 19.0 and most preferably above 19.5 (dry volume) percent.

Preferably the treated outside air is heat exchanged with the higher temperature CO2 rich intake air from the closed environment or from the higher temperature gas stream comprising desorbed CO2.

It was found that higher than normal levels of CO₂ (> 400 ppm) can have detrimental effects on the intellectual performance and attention span of humans. In " Is CO2 an Indoor Pollutant? Direct Effects of Low-to-Moderate CO2 Concentrations on Human Decision-Making Performance", Environmental Health Perspectives, 2012, 120, 1671-1677 by "Usha Satish, Mark J. Mendell, Krishnamurthy Shekhar, Toshifumi Hotchi, Douglas Sullivan, Siegfried Streufert, and William J. Fisk it is described that, already at CO₂ levels of 800-1000 ppm, certain intellectual capabilities are reduced by 50% Therefore, it is important to ventilate closed environments to reduce the CO₂ levels below 800 ppm.

### BRIEF DESCRIPTION OF THE DRAWINGS

The features and advantages of the invention will be appreciated upon reference to the following drawings, in which:

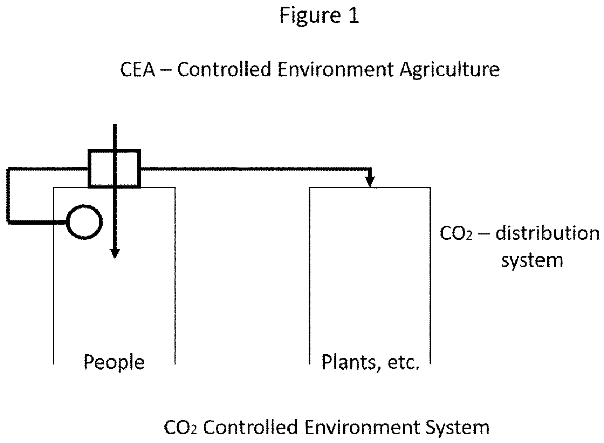

FIG. 1 is a view of one embodiment of the invention showing the combination of CO₂ capturing from a building where people are present while utilizing the CO₂ for a building where biomass is grown making use of Controlled Environment Agriculture concepts.

## Claims

1. A method to improve air quality in closed environments where humans and/ or animals live, comprising
a) Taking in air from the closed environment and/or taking in ventilation air from outside,
b) Treating the air to reduce carbon dioxide CO₂ content of the air,
c) Introducing the treated air into the closed environment ,
d) wherein the CO₂ level in the closed environment is preferably kept to a level below 600 ppm CO₂

2. The method of claim 1 wherein the CO₂ content in the treated air is reduced to below 400 ppm, preferably below 300, 200 or even below 100 ppm.

3. The method of claims 1 - 2, wherein the CO₂ content in the treated air is reduced by contacting the air with a CO₂ adsorbent to capture the CO₂, preferably a non-toxic CO₂ adsorbent.

4. The method of claims 1 - 3, comprising a step wherein the CO₂ content in the closed environment is measured and the CO₂ content is reduced if the CO₂ level in the closed environment is above 600 ppm.

5. The method of claims 1 - 4, wherein in step a) also ventilation air from outside is taken in to increase the oxygen O₂ content in the closed environment.

6. The method of claims 1 - 4, comprising a step wherein the oxygen O₂ content in the closed environment is measured and ventilation air is taken in from outside, instead of- or in addition to- air taken in from the closed environment, if the oxygen O₂ content in the closed environment is below a set threshold value, preferably below a level of 18.0, more preferably 18.5, even more preferably 19.0 and most preferably below 19.5 (dry volume) percent.

7. The method of claim 1 to 6, wherein also water is captured from the air.

8. The method of claim 1 to 7, whereby CO₂ and optionally also water is captured and reused for the growing of plants and/ or other biomass materials or for the conversion into fuels, chemicals or food components.

9. An air conditioning device for improving the air quality in closed environments where humans and/ or animals live, comprising
a) inlet means a) for taking in air from the closed environment (a1) or means for taking in ventilation air from outside (a2) or both,
b) means b) for treating the air by reducing carbon dioxide CO₂ content of the air, wherein the CO₂ content in the treated air is reduced to below 400 ppm, preferably below 300, 200 or even below 100 ppm and wherein the CO₂ removed from the air is preferably captured,
c) outlet means c) for introducing the treated air into the closed environment,
d) preferably means d1) for measuring the CO₂ level in the closed environment and control means d2) for controlling means a) and/ or b) to an amount of air taken in and/or a reduction of carbon dioxide CO₂, in the treated air such that the CO₂ level in the closed environment is kept to a level below a set level, preferably below 600 ppm CO₂,
e) preferably means e1) for measuring the O₂ level in the closed environment, and control means e2) for controlling means a) and/ or b) to take in ventilation air taken in from outside, instead- of or in addition to air taken in from the closed environment, if the oxygen O₂ content in the closed environment is below a set threshold value, preferably below a level of 18.0, more preferably 18.5, even more preferably 19.0 and most preferably below 19.5 (dry volume) percent,
f) preferably cooling means f),
g) Preferably means g) for capturing water from the air,
h) Preferably means h) for providing the captured CO₂ and optionally water that is captured for growing of plants and/ or other biomass materials or for conversion into fuels, chemicals or food components.
